# DEMANDE DE BREVET EUROPEEN

(11) **EP 1 213 932 A1**
(43) Date de publication de la demande: **12.06.2002**
(21) Numéro de dépôt: 01000665.8
(22) Date de dépôt: 28.11.2001
(51) Int. Cl.: H04Q 7/22, H04Q 7/32

(54) **Procédé de réglage d'un téléphone mobile et téléphone mobile réglable selon ce procédé**

(30) Priorité: 11.12.2000 FR 0016268
(71) Demandeur: SAGEM S.A., 75015 Paris (FR)
(72) Inventeur: Dimech, Jean-Marc, 60240 Chaumont en Vexin (FR); Porato, Marc, 60240 Loconville (FR); Almeras, Pierre, 75017 Paris (FR)
(74) Mandataire: Schmit, Christian Norbert Marie

(57) **Abrégé**

Pour faciliter l'utilisation d'un téléphone mobile (1) on prévoit de télécommander le réglage de ce téléphone mobile depuis un site distant (14). Afin de contrôler que ces modifications ne se produisent pas d'une manière inautorisée, on prévoit qu'un utilisateur qui accepte un tel fonctionnement incorpore (25) lui-même dans son téléphone mobile un code (26) d'autorisation de télécommande. Par la suite il devient possible de modifier le fonctionnement de ce téléphone mobile en lui envoyant préalablement des messages de modification munis d'un code (19) d'autorisation de télécommande correspondant. A titre de perfectionnement on prévoit qu'à un code d'autorisation de télécommande soit associé un ensemble limité de fonctions ou d'organes du téléphone mobile qui peuvent être modifiés.

## Description

La présente invention a pour objet un procédé de réglage d'un téléphone mobile et un téléphone mobile réglable selon ce procédé. Elle a pour but d'augmenter les capacités d'utilisation de tels appareils et d'améliorer la facilité de leur paramétrage.

Dans le domaine de la téléphonie mobile, on connaît des téléphones mobiles pour lesquels sur un écran apparaît un menu permettant de régler diverses fonctions d'utilisation. Avec un clavier du téléphone mobile, il est alors possible d'évoluer dans ces menus, de choisir certaines de ces fonctions, et d'activer des options de fonctionnement. Par exemple, on peut choisir une sonnerie du téléphone mobile, on peut choisir une mise en oeuvre d'un vibreur, préalable ou en substitution, à une sonnerie lors d'un appel entrant, ou encore on peut choisir de présenter un numéro d'appel pour un appel entrant.

La manipulation d'un téléphone mobile pouvant être fastidieuse, il est même prévu, pour remplir un annuaire de correspondants préférés, de déléguer à un opérateur le soin de procéder à l'enregistrement des coordonnées téléphoniques de ces correspondants préférés. Dans ce cas, cet opérateur compose des messages de données, en général au format SMS (Short Message Service - court message de service) qui comportent essentiellement une indication de classe selon que le contenu du message de données doit être enregistré dans un circuit dit SIM (Subscriber Identification Module - module d'identification d'abonné), dans une mémoire du téléphone mobile, ou simplement affiché à l'écran. En outre ces messages de service sont assortis d'un code instruction, véhiculé dans le message lui-même ou dans un signal de signalisation envoyé en parallèle, provoquant l'enregistrement des données contenues dans le message dans une mémoire destinatrice du téléphone mobile. Un procédé de ce type est par ailleurs décrit dans la demande de brevet FR-A-2 785 137.

On connaît, par une demande de brevet déposée le même jour pour le même déposant, une utilisation d'un téléphone mobile comme centrale d'alarme. Le principe de cette utilisation consiste à placer un téléphone mobile en campement permanent, notamment en l'alimentant électriquement par le secteur, et à le munir d'un comparateur pour comparer une manifestation extérieure (notamment un bruit) à une manifestation attendue (le calme). Lorsque la manifestation extérieure devient trop forte, le comparateur déclenche la composition d'un appel téléphonique à destination d'un destinataire, et transmet à ce destinataire une alarme, une sonnerie prévue à l'avance, ou tout simplement lui permet de prendre connaissance de la manifestation extérieure : diffuse sur le haut-parleur de ce destinataire le bruit entendu, ou montre sur l'écran du téléphone mobile de ce destinataire une image prélevée avec la caméra du téléphone mobile servant d'alarme.

La mise en alarme d'un tel téléphone mobile est une des fonctions d'utilisation possibles d'un tel téléphone. Au cours d'une telle utilisation, il est possible toutefois de rencontrer des aberrations de fonctionnement. Par exemple un téléphone mobile, placé ainsi dans une salle à manger d'un domicile, est censé par la détection de bruits protéger ce domicile contre l'intrusion. Cependant si un voisin de ce domicile se met à faire beaucoup de bruit, par exemple au moyen d'une perceuse électrique pour réaliser un aménagement dans son propre domicile, le téléphone mobile servant d'alarme risque d'alerter sans arrêt le correspondant destinataire. Celui-ci est alors obligé de prendre en considération tous ces appels, et de se rendre compte à chaque fois qu'ils ne correspondent à rien de significatif. Il est alors impossible à cet utilisateur de modifier les conditions de fonctionnement de son téléphone mobile servant d'alarme sans se rendre sur place pour intervenir directement sur l'appareil à partir des menus de ce dernier.

Dans un autre cas, il est possible qu'on cherche à joindre en urgence une personne dont on sait qu'elle a laissé son téléphone mobile en fonctionnement, mais qu'elle refuse de décrocher, parce qu'elle est en réunion d'affaires par exemple. Dans ces conditions, il est impossible de prévenir la personne en question puisque, tout au plus, elle aura accepté que l'identité de l'appelant apparaisse sur son téléphone mobile, et donc se réserve ainsi la possibilité de filtrer les appels qui lui sont destinés.

Dans d'autres cas, des services après vente de fabricants de téléphone mobile, notamment de type GSM, peuvent avoir des difficultés à communiquer des informations nécessaires à leurs clients pour leur permettre de régler leurs appareils. Par exemple le verrouillage ou le déverrouillage de ces appareils, en cas de demande de changement d'abonnement est une opération délicate que les utilisateurs peuvent ne pas savoir faire. Par exemple, ils peuvent vouloir enlever le verrou de leur carte SIM pour effectuer un test de fonctionnement de l'appareil à distance. Dans ce cas, il est nécessaire en général de disposer d'une autre installation téléphonique, avec laquelle l'utilisateur se met en relation avec le service après-vente. Au cours de cette relation, il paramètre sur son téléphone mobile, avec le clavier de ce dernier, le fonctionnement de ce téléphone mobile en suivant les indications données par un agent de ce service après-vente.

Toutes ces opérations sont compliquées. Elles conduisent dans certains cas à des impossibilités de mise à disposition de services qui seraient pourtant bien utiles à l'utilisateur. Dans l'invention, pour résoudre ce problème de complexité de réglage, on prévoit d'effectuer ce réglage à distance, par une télécommande. Pour rendre alors une telle télécommande accessible, sans que des abus puissent être commis, on prévoit alors de munir le téléphone mobile d'un circuit de mémorisation d'un code d'autorisation de télécommande, d'un circuit de décodage d'une autorisation de télécommande, et on munit chaque message de télécommande d'un code d'autorisation correspondant. Le téléphone mobile en réception du message de télécommande vérifie alors la concordance d'un code d'autorisation transmis et du code d'autorisation mémorisé. Si celle-ci est réalisée, le réglage se réalise en fonction des paramètres de réglage contenus dans le message de données transmis.

Dans un perfectionnement de l'invention, on prévoit par ailleurs de mémoriser une liste de codes d'autorisation. Un premier code d'autorisation peut être ainsi dévolu à un opérateur, et connu de ce dernier seul. Il peut conduire, de préférence uniquement, à des modifications des conditions de l'abonnement, notamment à la souscription d'options nouvelles voire à la suppression d'options d'utilisation accordées (calculette, présentation du numéro, gestion du double appel, etc.). Un autre code d'autorisation peut être dévolu à un fabricant du téléphone mobile. Ce code d'autorisation de fabricant peut alors de préférence être seulement réservé à la modification de certains autres paramètres, pouvant par ailleurs aller jusqu'à la modification du système d'exploitation du téléphone mobile. Enfin un troisième type de code, de type personnel à l'utilisateur, peut être enregistré par ce dernier en une opération préalable. Par la suite, à distance avec un autre téléphone mobile notamment, il peut modifier le fonctionnement de son premier téléphone mobile à condition d'incorporer dans un message de données de modification le code d'autorisation de télécommande correspondant à celui qu'il a enregistré dans le téléphone mobile à télécommander. En réception des messages de télécommande, le code d'autorisation de télécommande reçu est comparé à tous les codes d'autorisation mémorisés et, en cas de succès de la comparaison à un quelconque d'entre eux, la télécommande de la paramétrisation du téléphone mobile est entreprise. On résout de cette façon tous les problèmes évoqués ci-dessus.

L'invention a donc pour objet un procédé de réglage d'un téléphone mobile par un utilisateur de ce téléphone mobile dans lequel
- on transmet à ce téléphone mobile un message de données numériques,
- on reçoit ce message de données numériques dans le téléphone mobile,
- et on règle le fonctionnement de ce téléphone mobile en fonction de ces données numériques reçues,
caractérisé en ce que
- l'utilisateur du téléphone mobile enregistre dans ce téléphone mobile un code d'autorisation de télécommande,
- on lit dans le message de données reçues un code d'autorisation,
- on compare le code d'autorisation lu avec le code d'autorisation de télécommande mémorisé dans le téléphone mobile,
- et on règle le fonctionnement du téléphone mobile si la comparaison est réussie.

L'invention a également pour objet un téléphone mobile comportant des moyens de réception d'un message de données numériques de télécommande, et des moyens de réglage télécommandé du fonctionnement de ce téléphone mobile en fonction de ces données numériques reçues, caractérisé en ce qu'il comporte des moyens pour qu'un utilisateur du téléphone mobile enregistre dans ce téléphone mobile un code d'autorisation de télécommande, des moyens pour lire dans le message de données numériques reçues un code d'autorisation, des moyens pour comparer le code d'autorisation lu avec le code d'autorisation de télécommande mémorisé dans le téléphone mobile, et des moyens pour régler le fonctionnement du téléphone mobile si la comparaison est réussie.

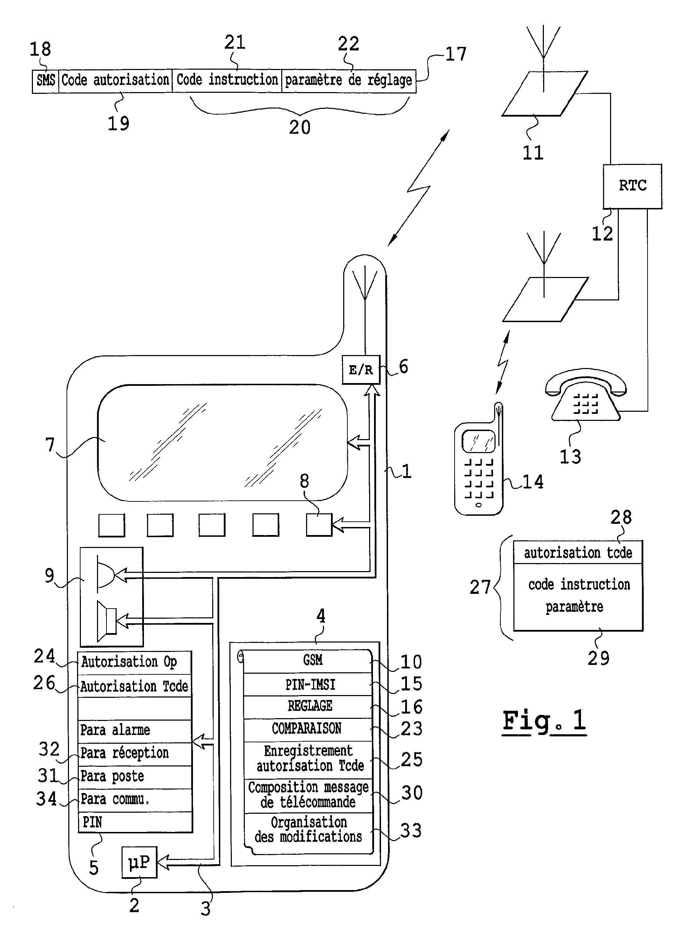

L'invention sera mieux comprise à la lecture de la description qui suit et à l'examen de la figure qui l'accompagne. Celles-ci ne sont présentées qu'à titre indicatif et nullement limitatif de l'invention. La figure 1 unique montre :
- Figure 1 : la représentation schématique d'un téléphone mobile dans une situation de réglage conforme au procédé de l'invention.

La figure 1 montre un téléphone mobile 1 utilisable avec le procédé de l'invention. Ce téléphone comporte d'une manière classique un microprocesseur 2 relié par un bus 3 de données, de commandes et d'adresses à une mémoire programme 4, à une mémoire de données 5, à un dispositif d'émission réception radioélectrique 6 (par ailleurs relié à une antenne), à un écran 7, à un clavier 8 ainsi qu'à un dispositif acoustique 9 comportant notamment un microphone et un haut-parleur.

La mémoire programme 4 comporte essentiellement un programme général 10, dit ici GSM, de gestion classique de la communication du téléphone mobile 1 avec une station de base 11 d'un réseau de téléphonie mobile. Cette station de base peut permettre de relier le téléphone mobile 1, notamment par l'intermédiaire d'un réseau de téléphonie commuté 12, avec un combiné classique 13 d'un autre utilisateur, ou avec un autre téléphone mobile 14 du même type que le téléphone mobile 1. Au moment de la mise en service, la mémoire programme lance un programme de reconnaissance 15, par le réseau de téléphonie mobile, de ce que le téléphone mobile 1 est un téléphone mobile utilisé par un utilisateur autorisé. Ce programme 15 comporte la composition par l'utilisateur d'un code secret d'utilisation PIN (Personal Identification Number - numéro d'identification personnel) et l'envoi à l'opérateur de téléphonie mobile d'un numéro IMSI (International Mobile Subscriber Identification - numéro international d'identification d'abonné) qu'un circuit central de cet opérateur reçoit et traite pour constater que l'utilisateur du téléphone mobile 1 est bien abonné au réseau de téléphonie mobile de cet opérateur et peut se servir de son téléphone mobile pour communiquer.

En dehors du mode normal d'utilisation du téléphone mobile, par un programme général 16 de réglage l'utilisateur peut, avec le clavier 8 et en regardant les indications apparentes sur l'écran 7, modifier l'utilisation de son téléphone mobile selon ses desiderata. D'une manière connue, en fonction des options souscrites avec son abonnement auprès de l'opérateur de téléphonie mobile, certains réglages seront ou ne seront pas possibles. Par exemple la présentation du numéro de l'appelant, ou le rappel automatique d'un appelant en cas d'occupation peuvent être proposés à l'écran 7 (si l'utilisateur a souscrit cette option auprès de l'opérateur) et activés par cet utilisateur en utilisant le programme de réglage 16 si à un moment donné il décide de bénéficier de cette option, ou désactivés si à un autre moment il décide de ne plus en bénéficier.

D'une manière connue, certains réglages peuvent être réalisés par envoi de messages de données, notamment de messages de type SMS 17 émis par la station de base 11, sur l'initiative de l'opérateur du réseau de téléphonie mobile. Un tel message 17 comporte un encapsulage 18 mentionnant entre autre son type, par exemple ici SMS, un code 19 d'autorisation de télécommande ainsi qu'une partie 20 propre à la télécommande. La partie propre à la télécommande comporte essentiellement un code instruction, ou une référence à un code instruction 21, ainsi que les paramètres de l'instruction, en l'occurrence ici des paramètres de réglage du téléphone mobile 1. Le code d'autorisation est un code qui, dans le document de brevet cité ci-dessus, est un code opérateur. Le mode de réglage du téléphone mobile 1 dans ce cas comporte un sous-programme 23 de réglage télécommandé au cours duquel une classe de l'encapsulage 18 permet d'orienter le message vers un traitement par le microprocesseur 2. Le microprocesseur 2 compare le code d'autorisation contenu dans le message SMS à un code d'autorisation d'opérateur 24 contenu dans la mémoire 5. Lorsque cette comparaison est fructueuse, le microprocesseur prélève dans la partie 20 le code d'instruction et exécute l'instruction correspondante, provoquant ainsi le réglage du téléphone mobile 1 en y incorporant les paramètres de réglage présents dans la partie 22 du message. Eventuellement le message 17 peut lui-même être archivé pour pouvoir être rejoué.

Dans l'invention pour pouvoir bénéficier d'une manière plus souple de ce mode de réglage, on prévoit la possibilité pour l'utilisateur de réaliser lui-même sa propre télécommande. En effet, selon les procédés connus, la télécommande nécessiterait le recours à l'opérateur de téléphonie mobile et donc compliquerait, retarderait, voire rendrait complètement impossible, une telle télécommande par l'utilisateur lui-même.

Dans ce but, la mémoire programme 4 comporte un programme 25 avec lequel l'utilisateur va pouvoir enregistrer dans la mémoire 5 de données un enregistrement 26 d'autorisation de télécommande qui sera connu de lui seul. Pour simplifier, on pourra admettre que cet utilisateur utilise son NOM comme code d'autorisation de télécommande. Il pourra de préférence choisir un code plus habile, plus compliqué. L'enregistrement du code d'autorisation de télécommande NOM doit se faire impérativement en utilisant le clavier 8 et en regardant l'écran 7 pour constater la réalité du code d'autorisation de télécommande mémorisé. Il serait toutefois possible de réaliser cet enregistrement au moyen d'un micro ordinateur relié au téléphone mobile. De préférence, on choisit de ne pas autoriser un premier enregistrement de ce code d'autorisation par télécommande. En effet, dans ce cas, le message de télécommande devrait comporter un code d'autorisation de télécommande qui ne pourrait (en fabrication) qu'être banal et connu de tous, ce qui rendrait le système inadapté. On prévoit cependant que la modification du code d'autorisation de télécommande puisse se réaliser par télécommande.

Le programme 25 comporte donc l'incorporation, dans le menu de paramétrage du téléphone, d'une option d'enregistrement d'un code d'autorisation de télécommande. Dans ces conditions, ce code d'autorisation de télécommande se placera dans la mémoire 5, par exemple à la suite du code d'autorisation dévolu à l'opérateur et mémorisé en zone 24.

De préférence on formera de plus une liste, enregistrée en un autre endroit de la mémoire 5, sachant qu'il peut y avoir plusieurs codes de télécommande différents : le code opérateur connu, le code propre à l'utilisateur, ainsi qu'un code par exemple propre à un fabricant du téléphone mobile et que ce dernier aura pu enregistrer préalablement dans tous les téléphones mobiles qu'il fabrique, en prévision d'une future mise à jour sous forme de service après vente des téléphones mobiles mis à disposition. Ce code de fabricant est connu de ce seul fabricant.

De préférence, dans ce cas, en fonction de la personnalité de l'acteur, et donc du code d'autorisation de télécommande qui sera contenu dans le message 17, on peut prévoir que cette liste permette de limiter les actions possibles. Par exemple, avec le code d'autorisation de télécommande on peut prévoir de seulement autoriser l'activation ou la désactivation de certaines options. La mise à disposition de ces options, elle, ne relève que du code opérateur. Par exemple, le code opérateur peut mettre à disposition un renvoi d'appel et l'utilisateur peut, avec un message de télécommande activer ou non ce renvoi d'appel (il ne peut pas le mettre à disposition si l'opérateur n'est pas d'accord). Par ailleurs à titre de service après-vente, le fabricant pourra être amené à changer le système d'exploitation 10 du téléphone mobile, au moins en partie au moment de l'apparition de perfectionnements. Par exemple le fabricant pourra par une action de télécommande modifier les conditions de fonctionnement d'un vocodeur du téléphone mobile, afin que celui-ci adopte un protocole permettant la reproduction des sons haute fidélité au lieu d'un protocole simple qui altère en partie ces sons.

Pour la réalisation d'une télécommande à distance, par exemple au moyen d'un téléphone mobile 14, l'utilisateur autorisé compose un message 27 au format d'un message SMS. Ce message 27 comporte une première partie 28 dans lequel l'utilisateur du téléphone mobile 14 incorpore le code d'autorisation de télécommande 28 devant correspondre au code d'autorisation de télécommande présent en zone 26 dans le téléphone mobile 1 et une deuxième partie 29 comportant les informations représentative de la partie 20 ci-dessus. Notamment, un organe ou une fonction du téléphone mobile 1 sont désignés par un code instruction et les paramètres de modification correspondants sont mentionnés dans une deuxième partie. D'une manière à rendre cette télécommande personnelle plus simple, le téléphone 14, comme le téléphone 1, comporte un sous-programme complémentaire 30 de composition du message de télécommande par lequel un message 27 au format du message 17 peut être édité par le téléphone mobile 14. Ce sous-programme 30 prévoit d'une manière connue l'édition des parties 18 et 20 dans un message 17. Il prévoit, selon l'invention, l'incorporation d'un code 19 d'autorisation de télécommande. Cette incorporation est notamment entreprise à l'aide du clavier 8 (ou d'un micro ordinateur raccordé) par un utilisateur autorisé qui connaît ce code.

Selon ce qui a été décrit ci-dessus, on peut organiser les réglages du téléphone mobile selon plusieurs classes. Une première classe peut comporter les fonctions de réglage du téléphone mobile lui-même. Celles-ci peuvent par exemple concerner une activation d'un verrouillage du clavier, un réglage de la date et de l'heure du téléphone mobile, un réglage du rétroéclairage de l'écran, un mode de sonnerie, un déclenchement d'un décompteur de temps, un bip de clavier, un fonctionnement d'un dispositif d'alarme, voire une langue du menu affiché sur l'écran ou autre. Il peut même être prévu de changer un code poste ou le code d'autorisation de télécommande du téléphone mobile 1. Un code poste est un code que l'utilisateur doit faire lorsque son clavier est verrouillé et qu'il veut le déverrouiller. Tous les paramètres ainsi modifiés et correspondant au téléphone mobile lui-même peuvent être enregistré dans une zone 31 de la mémoire 24.

Par ailleurs il est possible de régler les paramètres de réception, présents dans une zone 32 de la mémoire 5 pour, par exemple, activer ou désactiver une présentation de numéro d'appelant, une activation d'un vibreur, une écoute de SMS commun, ou un décroché automatique du téléphone mobile. Un tel décroché automatique qui n'est normalement pas choisi par l'utilisateur peut être retenu lorsqu'on veut transmettre depuis un téléphone mobile distant 14 un message vocal à l'utilisateur du téléphone mobile 1 et que celui-ci doit l'entendre impérativement.

Dans ce cas, avec le téléphone mobile 14, on compose préalablement un message de télécommande destiné au téléphone mobile 1. Ce message de télécommande est destiné à provoquer le mode décroché automatique du téléphone mobile 1 (à l'insu du propriétaire de ce téléphone mobile 1). Ce message de télécommande est envoyé. Puis, avec le téléphone mobile 14, on lance un appel au téléphone mobile 1. Le téléphone mobile 1 décroche alors immédiatement et dès que la communication est établie, on dicte le message qu'on veut que l'utilisateur entende dans tous les cas. De préférence le décroché automatique sera combiné avec une écoute mains libres. A cet effet on pourra enregistrer en zone 26, ou dans une zone connexe, l'autorisation de télécommande spécifique à un interlocuteur, pour l'autoriser à provoquer à sa volonté, préalablement, cette option de décroché automatique et d'écoute amplifiée. Par exemple le code d'autorisation de télécommande (par exemple limité à cette action) pourra comporter le nom de cet utilisateur. Dans ce but, la mémoire programme 4 comportera alors un programme 33 d'organisation des modifications par télécommande ou la liste pourra comporter des autorisations ou non de télécommande sur certaines options. Les enregistrements de la liste comporteront alors deux types de zone, un premier type où est enregistré le code d'autorisation de télécommande et un deuxième type où sont désignées les fonctions qui peuvent être télécommandés en utilisant ce code d'autorisation de télécommande.

Par ailleurs la télécommande pourra servir à modifier des paramètres de communication mémorisés dans une zone 34 de la mémoire 5. Ces paramètres de communication correspondent par exemple à un renvoi d'appel (et dans ce cas le numéro de téléphone sur lequel les appels doivent être renvoyés peut être modifié), un double d'appel, une limitation d'appel pour empêcher une communication trop longue (ou pour forcer implicitement la coupure d'une communication), une superposition d'appel pour signaler à l'utilisateur du téléphone mobile 1, bien qu'il soit déjà en communication, qu'un autre interlocuteur cherche à le joindre. Au besoin, on modifiera l'activation du rappel automatique du téléphone 1 pour que celui-ci rappelle le téléphone mobile 14 dès la fin de sa conversation. Eventuellement, on peut provoquer une sonnerie de réveil ou une écoute mains libres comme évoqués ci-dessus. Dans un mode préféré de réalisation, la télécommande du téléphone mobile 1 peut se produire même pendant une communication échangée avec ce téléphone mobile 1.

Dans le mode d'alarme présenté ci-dessus, la télécommande peut comporter la mise en service, ou l'arrêt, de l'utilisation du téléphone mobile 1 comme centrale d'alarme dans l'endroit où ce dernier se trouve.

## Revendications

1. Procédé de réglage des fonctions d'utilisation d'un téléphone mobile (1) par un utilisateur de ce téléphone mobile dans lequel
- l'utilisateur connecte ce téléphone mobile à un réseau de téléphonie mobile en campement permanent,
- on transmet à ce téléphone mobile un message (17) de données numériques,
- on reçoit ce message de données numériques dans le téléphone mobile,
- on lit dans le message de données numériques reçues un code d'autorisation (19) de télécommande,
- et on compare (23) le code d'autorisation de télécommande lu avec un code d'autorisation de télécommande mémorisé dans le téléphone mobile,
**caractérisé en ce que**
- on force automatiquement le réglage (16) de fonctionnement de ce téléphone mobile, en fonction de ces données numériques reçues, et si la comparaison est réussie,
- l'utilisateur du téléphone mobile enregistre (25) lui-même dans ce téléphone mobile le code d'autorisation de télécommande mémorisé.

2. Procédé selon la revendication 1, **caractérisé en ce que**
- on enregistre dans le téléphone mobile un code d'autorisation de télécommande correspondant à un acteur,
- cet acteur connaît ce code d'autorisation de télécommande et l'incorpore dans un message de données.

3. Procédé selon l'une des revendications 1 à 2, **caractérisé en ce que**
- on enregistre dans le téléphone mobile une liste de codes d'autorisation de télécommande correspondant à différents acteurs.

4. Procédé selon l'une des revendications 1 à 3, **caractérisé en ce que**
- on associe dans une liste du téléphone mobile des codes d'autorisation de télécommande avec des fonctions qui peuvent être télécommandées.

5. Procédé selon l'une des revendications 1 à 4, **caractérisé en ce que**
- on compose (30) un message (29) de télécommande avec un téléphone mobile (14),
- et on ajoute à ce message de télécommande un code (28) d'autorisation de télécommande correspondant à un acteur désigné.

6. Procédé selon l'une des revendications 1 à 5, **caractérisé en ce qu'**on règle par télécommande une ou plusieurs des fonctions suivantes du téléphone mobile :
- des fonctions de réglage du téléphone mobile comportant un codage de poste, et ou un verrouillage du clavier, et ou un réglage de l'heure, et ou un réglage d'un rétroéclairage de l'écran, et ou un mode de sonnerie, et ou le déclenchement d'un décompteur de temps, et ou un bip de clavier, et ou une langue du menu,
- des fonctions de réglage de la réception d'appels par le téléphone mobile comportant une présentation de numéro, et ou une activation d'un vibreur, et ou une écoute de SMS communs, et ou un décroché automatique du téléphone mobile,
- des paramètres de gestion des communications du téléphone mobile correspondant à un renvoi d'appel, et ou à un double appel, et ou à une limite d'appel, et ou à un rappel automatique, et ou à un réveil, et ou à un mode mains libres,
- une mise en alarme du téléphone mobile.

7. Procédé selon l'une des revendications 1 à 6, **caractérisé en ce que**
- on modifie par télécommande un code d'autorisation de télécommande.

8. Téléphone mobile (1) comportant des moyens (6) de réception d'un message (17) de données numériques de télécommande (21), et des moyens de réglage télécommandé (23) du fonctionnement de ce téléphone mobile en fonction de ces données numériques reçues, **caractérisé en ce qu'**il comporte des moyens (25) pour qu'un utilisateur du téléphone mobile enregistre dans ce téléphone mobile un code d'autorisation de télécommande, des moyens pour lire (23) dans le message de données numériques reçues un code d'autorisation, et des moyens (23) pour comparer le code d'autorisation lu avec le code d'autorisation de télécommande mémorisé dans le téléphone mobile, et des moyens pour forcer le fonctionnement du téléphone mobile si la comparaison est réussie.

9. Téléphone selon la revendication 8, **caractérisé en ce qu'**il comporte des moyens (30) pour composer un message de télécommande avec incorporation d'un code d'autorisation de télécommande.
